# EUROPÄISCHE PATENTSCHRIFT

(11) **EP 3 298 871 B1**
(45) Veröffentlichungstag und Bekanntmachung des Hinweises auf die Patenterteilung: **07.08.2019**
(21) Anmeldenummer: 17168322.0
(22) Anmeldetag: 27.04.2017
(51) Int. Cl.: A01B 63/112, G01L 3/10

(54) **LANDWIRTSCHAFTLICHES FAHRZEUG, VERFAHREN ZUR ERFASSUNG EINER MECHANISCHEN BELASTUNG VON BAUTEILEN EINES LANDWIRTSCHAFTLICHEN FAHRZEUGS**
AGRICULTURAL VEHICLE, PROCESS FOR DETECTING A MECHANICAL LOAD ON COMPONENTS OF AN AGRICULTURAL VEHICLE
MACHINE AGRICOLE , PROCÉDÉ DE DÉTÉCTION D'UNE CHARGE MÉCANIQUE SUR UN ÉLÉMENT D' UNE MACHINE AGRICOLE

(30) Priorität: 26.09.2016 DE 102016118176
(43) Veröffentlichungstag der Anmeldung: 28.03.2018
(73) Patentinhaber: CLAAS Tractor S.A.S., 78141 Vélizy-Villacoublay Cedex (FR)
(72) Erfinder: Kloster, Victor, 33178 Borchen (DE); Peeters, Michael, 33098 Paderborn (DE); Wieckhorst, Jan Carsten, 33098 Paderborn (DE); Sensel, Uwe, 39104 Magdeburg (DE); Graf, Heiko, 53474 Ahrweiler (DE); Fedde, Thomas, 33129 Delbrück (DE)
(74) Vertreter: CLAAS Gruppe

(56) Entgegenhaltungen:
- EP-A2- 2 851 667
- WO-A1-2013/104981
- GB-A- 2 527 405

## Beschreibung

Die vorliegende Erfindung betrifft ein landwirtschaftliches Fahrzeug gemäß dem Oberbegriff des Anspruches 1. Weiterhin betrifft die Erfindung ein Verfahren zur Erfassung einer mechanischen Belastung durch Kräfte und/oder Momente mechanisch belasteter Bauteile eines landwirtschaftlichen Fahrzeugs gemäß dem Oberbegriff des Anspruches 10 sowie die Verwendung einer Sensoranordnung zur Erfassung einer mechanischen Belastung mindestens eines Bauteils eines landwirtschaftlichen Fahrzeugs gemäß dem Oberbegriff des Anspruches 14.

Bei für landwirtschaftliche Fahrzeuge, insbesondere Traktoren, verfügbaren Reifendruckregelanlagen wird der Reifeninnendruck für Straßen- und Feldfahrt von einer Bedienperson eingestellt und anschließend von einer Steuerungseinrichtung entsprechend gesteuert oder geregelt. Üblicherweise wird für die Straßenfahrt ein hoher Reifendruck gewählt, um den Reifenverschleiß und den Rollwiderstand zu minimieren, wodurch eine Verbrauchsreduzierung des Kraftstoffes erreichbar ist. Währenddessen wird bei Feldarbeiten der Reifendruck abgesenkt, um die Belastung des befahrenen Bodens zu minimieren. Bei einem Absenken des Reifeninnendruckes für die Feldfahrt ist zu beachten, dass die Reifentragfähigkeit von dem Reifeninnendruck abhängt. Von den Reifenherstellern werden üblicherweise entsprechende Tabellen veröffentlicht, welche die maximal zulässigen Radlasten in Abhängigkeit von der Fahrgeschwindigkeit und dem Reifeninnendruck angeben. Die Radlast lässt sich heute nur statisch ermitteln. Die während des Betriebs einiger Anbaugeräte auftretenden Stützkräfte auf den Traktor bleiben unbekannt und können von der Bedienperson nur geschätzt werden. Entsprechend wird, um eine Überlastung des Reifens aufgrund eines zu niedrigen Reifeninnendrucks zu vermeiden, in der Regel eine Sicherheitsreserve vorgesehen. Der niedrigste zulässige Reifeninnendruck gilt allgemein als bodenschonend, da dieser einen direkten Einfluss auf den Kontaktflächendruck im Reifenlatsch hat. Der, für einen optimalen Fahrwerkwirkungsgrad erforderliche, Reifeninnendruck hängt von den Radlasten sowie der Beschaffenheit des befahrenen Untergrundes ab, wobei ein niedriger Reifeninnendruck bei Feldarbeiten ebenfalls als wirkungsgradgünstig gilt.

Aus der WO 2013/104981 A1 ist eine Hinterachse für einen Traktor bekannt, an deren Achstrichter eine als ein Dehnungssensor ausgeführte Messvorrichtung angebracht ist. Eine abhängig von der Achslast eintretende Verformung des Achstrichtergehäuses soll mittels des Dehnungssensors erfassbar sein, um auf diese Weise die Achslast bestimmen zu können. Nachteilig an dieser Art von Sensor ist, dass eine genaue Messung schon aufgrund der (erforderlichen) Steifigkeit des Achstrichters erschwert ist. Weiterhin ist der Dehnungssensor am Einbauort unmittelbar der Umgebung ausgesetzt, somit also den Einflüssen von Schmutz, Temperatur, Feuchtigkeit und gegebenenfalls sogar mechanischer Einwirkung (z.B. Steinschlag), wodurch unter anderem das Messergebnis stark beeinträchtigt werden kann. Darüber hinaus ist die Einrichtung und Montage des Dehnungssensors aufwändig, da in die Oberfläche des Achstrichtergehäuses eine entsprechende talförmige Aufnahme eingearbeitet werden muss, in welcher der Dehnungssensor angeordnet ist. Die Aufnahme befindet sich im Übergangsbereich von einem ersten Abschnitt, der einen konstanten Durchmesser aufweist, hin zu einem zweiten Abschnitt, der einen zunehmenden Durchmesserverlauf aufweist. Diese Aufnahme für den Dehnungssensor muss bei der Herstellung des Achstrichtergehäuses auch unter Festigkeitsgesichtspunkten berücksichtigt werden. Aus der EP 2 851 667 A2 ist eine auf dem Prinzip der inversen Magnetostriktion beruhende Sensoranordnung zum Erfassen einer mechanischen Beanspruchung eines Bauteils eines landwirtschaftlichen Fahrzeugs bekannt.

Bei Traktoren lässt sich zumindest die Summe der in horizontaler Richtung angreifenden Radkräfte, welche der Zugkraft des Gesamtfahrzeugs entspricht, durch eine Kraftmessung zwischen ziehendem Traktor und am Heckdreipunkt angebautem Arbeitsgerät ermitteln. Neben einer geringen damit erzielbaren Genauigkeit (nur qualitative Messung von Kraftzunahme bzw. -abnahme) ist daran nachteilig, dass sich die Messung nur mit am Heckdreipunkt angebautem Arbeitsgerät durchführen lässt.

Insbesondere für ungefederte Achsen landwirtschaftlicher Fahrzeuge hat sich bis heute keine Sensortechnologie durchgesetzt, die ein einfaches und zuverlässiges Messen zumindest von Radkräften erlaubt.

Aufgabe der vorliegenden Erfindung ist es, ein landwirtschaftliches Fahrzeug der eingangs genannten Art bereitzustellen, welches sich durch eine vereinfachte und verbesserte Sensoranordnung zur Erfassung von mechanischen Belastungen, insbesondere bewegter, Bauteile des Fahrzeugs auszeichnet. Weiterhin sollen ein Verfahren zur Erfassung einer mechanischen Belastung von Bauteilen eines landwirtschaftlichen Fahrzeugs sowie die Verwendung einer Sensoranordnung zur Erfassung einer mechanischen Belastung mindestens eines Bauteils eines landwirtschaftlichen Fahrzeugs verbessert werden.

Diese Aufgabe wird erfindungsgemäß durch ein landwirtschaftliches Fahrzeug gemäß den Merkmalen des Anspruches 1, ein Verfahren gemäß den Merkmalen des Anspruches 10 sowie die Verwendung einer Messvorrichtung gemäß den Merkmalen des Anspruches 14 gelöst. Vorteilhafte Weiterbildungen sind Gegenstand der von den unabhängigen Patentansprüchen abhängigen Unteransprüche.

Gemäß dem Anspruch 1 wird ein landwirtschaftliches Fahrzeug vorgeschlagen, welches durch Kräfte und/oder Momente mechanisch belastete bzw. beanspruchte Bauteile umfasst, insbesondere durch Radkräfte belastete Achswellen. Weiterhin ist eine Steuerungseinrichtung sowie eine Messvorrichtung zur Erfassung der mechanischen Belastung mindestens eines der Bauteile vorgesehen. Zur Bestimmung zumindest der Kräfte, die auf das mindestens eine Bauteile einwirken, weist das landwirtschaftliche Fahrzeug eine, insbesondere modulare, Sensoranordnung zur Anordnung an dem mindestens einem Bauteil des Fahrzeuges auf, wobei die Sensoranordnung mindestens einen, auf dem Prinzip der berührungslosen Abstandsmessung basierenden, Sensor zur Erfassung einer für eine mechanische Belastung charakteristischen physikalischen Größe aufweist. Die berührungslose Abstandsmessung weist gegenüber einer Messung mit einem Dehnungssensor den Vorteil auf, dass die Anordnung des zumindest einen Sensors nicht unmittelbar an oder in dem Messobjekt erfolgt. So sind statische Radkraftmessungen ohne Winkelsensor möglich.

Hierbei wird mittels der Sensoranordnung als charakteristische physikalische Größe eine Relativverformung zwischen dem mechanisch belasteten Bauteil und einer das Bauteil abschnittsweise umgebenden Einhausung gemessen. Die Verformung respektive Abstandsänderung einer balkenartigen Strukturkomponente, wie einer Achswelle, ist im Bereich der elastischen Verformung proportional zu der auftretenden mechanischen Belastung. Somit kann mittels der Sensoranordnung die Verformung beziehungsweise Abstandsänderung auf die hierfür ursächliche mechanische Belastung zurückgeführt werden.

Dabei sollte eine Anordnung von zwei oder mehr Sensoren in unterschiedlichen Ebenen des mindestens einen mechanisch belasteten bzw. beanspruchten Bauteils erfolgen. Bevorzugt erfolgt die Anordnung der Sensoren im Bereich der höchsten Relativverformung des mechanisch beanspruchten Bauteils. Berührungslos arbeitende Abstandssensoren zeichnen sich, im Unterschied zu ebenfalls berührungslos arbeitenden magnetostriktiven Sensoren, durch einen einfacheren Umgang mit den Querkräften und Axialkräften aus. Magnetostriktive Sensoren messen indirekt eine Materialspannung, welche auch durch Axialkräfte und Querkräfte in geringerem Umfang entstehen, aber nicht als solche Störkräfte identifiziert werden können. Die Empfindlichkeit des Abstandssensors ist gegenüber diesen Störgrößen reduziert. Es wird lediglich die Gestaltänderung des Bauteils als Störgröße erfasst. Ergänzend können Sondergeometrien des Bauteils, beispielsweise Nuten oder dergleichen, aus dem Messsignal herausgefiltert werden.

Da Achswellen gegen Torsion dimensioniert werden, ist die Achswelle für reine Biegebeanspruchungen überdimensioniert, wodurch die aus der mechanischen Belastung resultierenden Biegespannungen sehr gering sind. Der messbare Signalausschlag eines magnetostriktiven Sensors ist für Kraftmessungen daher sehr gering. Entsprechend ist die Verwendung von berührungslos arbeitenden Abstandsensoren zur Kraftmessung vorteilhaft.

Zur Vereinfachung der Anordnung des zumindest einen berührungslos arbeitenden Abstandssensors kann die das mechanisch belastete Bauteil abschnittsweise umgebende Einhausung mit einer oder mehreren vorkonfektionierten Montagestellen ausgestattet sein. Gegenüber magnetostriktiven Sensoren weisen Abstandssensoren eine geringere Baugröße auf, so dass diese einfacher in einen bestehenden Achsaufbau zu integrieren sind. Die Verwendung eines aus der WO2013/104981 A1 bekannten Dehnungssensors erfordert zudem eine besondere konstruktive Ausgestaltung, um diesen messtechnisch sinnvoll platzieren zu können. Zudem ermöglicht die Vorkonfektionierung auch ein Nachrüsten weiterer Sensoren, wenn beispielsweise lediglich eine Kraftmessung vorgesehen war, die um die Erfassung des auf das Bauteil wirkenden Drehmoments ergänzt werden soll.

Insbesondere kann das mechanisch belastete bzw. beanspruchte Bauteil als ein bewegtes Bauteil, insbesondere als Welle, ausgeführt sein.

Alternativ oder zusätzlich kann die Sensoranordnung mittels einer Haltevorrichtung an einer das mindestens eine mechanisch belastete Bauteil aufnehmenden Einhausung anbringbar sein. Die Haltevorrichtung kann eine der Anzahl der zu messenden Größen entsprechende Anzahl von Sensoren aufnehmen, die entsprechend ihrer Funktion zur Messung von Radkräften und/oder Drehmomenten ausgerichtet sind.

Weiterhin kann die Steuerungseinrichtung zur Erfassung und Auswertung der von der Sensoranordnung bereitgestellten Signale eingerichtet sein. Die Steuerungseinrichtung empfängt und verarbeitet die von der Sensoranordnung empfangenen Signale. Dabei kann die Steuerungseinrichtung mit einem Signalempfänger eines Positionsortungssystems in Verbindung stehen. Mittels der von dem Positionsortungssystem empfangenen Signale kann beispielsweise eine Kartierung von aufgebrachten Zugkräften bei der Bodenbearbeitung erstellt werden.

Insbesondere können die zur Messung des Abstands verwendeten Sensoren der Sensoranordnung als induktive Abstandssensoren ausgeführt sein.

Vorteilhaft ist es, wenn die Sensoranordnung einen zusätzlichen Sensor umfasst, der auf dem berührungslosen Messprinzip der Magnetostriktion basiert. Mittels dieses zusätzlichen, ebenfalls berührungslos arbeitenden, magnetostriktiven Sensors lässt sich das an dem mechanisch belasteten Bauteil auftretende Drehmoment erfassen. Hierzu kann der zusätzliche Sensor als aktiver oder passiver magnetostriktiver Sensor ausgebildet sein.

Darüber hinaus ist es sinnvoll, einen Temperatursensor im Bereich der Sensoranordnung anzuordnen. Der Temperatursensor kann als ein externer Sensor ausgebildet oder in zumindest einen Sensor der Sensoranordnung integriert sein. Mittels des Temperatursensors lässt sich eine Temperaturdrift bei der Messung durch die Sensoren kompensieren. Die von dem Temperatursensor bereitgestellten Signale werden von der Steuerungseinrichtung empfangen und ausgewertet.

Des Weiteren kann ein Drehwinkelsensor im Bereich der Sensoranordnung angeordnet sein. Der Drehwinkelsensor kann als Inkrementalgeber oder Absolutwertgeber ausgeführt sein Die Messsignale des Drehwinkelsensors können zur Kompensation einer durch eine Exzentrizität und/oder eine Gestaltänderung des bewegten, mechanisch belasteten Bauteils hervorgerufenen Beeinflussung der von der Sensoranordnung erfassten Messwerte verwendet werden.

Weiterhin kann die Steuerungseinrichtung zur Kompensation einer auf Abstandsänderungen des Sensorkopfes des magnetostriktiven Sensors zu dem mechanisch belasteten Bauteil basierenden Störgröße eingerichtet sein. Dazu kann das bereits aufgrund der Kraftmessung von dem zumindest einen Abstandssensor bereitgestellte Signal von der Steuerungseinrichtung zur Kompensation der Abstandsänderung des Sensorkopfes des magnetostriktiven Sensors verwendet werden. Mithilfe des Abstandssignals kann die Abstandsempfindlichkeit des magnetostriktiven Sensors kompensiert werden.

Die eingangs gestellte Aufgabe wird gemäß dem unabhängigen Anspruch 12 durch ein Verfahren zur Erfassung einer mechanischen Belastung von Bauteilen eines landwirtschaftlichen Fahrzeugs durch Kräfte und/oder Momente gelöst, wobei die mechanische Belastung mindestens eines der Bauteile durch eine Messvorrichtung erfasst und von einer Steuerungseinrichtung ausgewertet wird. Erfindungsgemäß ist vorgesehen, dass die Messvorrichtung als eine, insbesondere modulare, Sensoranordnung ausgeführt ist, die mindestens einem Bauteil des Fahrzeuges zugeordnet wird, und mindestens einen, auf dem Prinzip der berührungslosen Abstandsmessung basierenden, Sensor zur Erfassung einer für eine mechanische Belastung charakteristische physikalische Größe aufweist, wobei mittels der Sensoranordnung als charakteristischen physikalischen Größe eine Relativverformung zwischen dem Bauteil und einer das Bauteil abschnittsweise umgebenden Einhausung gemessen wird.

In bevorzugter Weiterentwicklung können von der Sensoranordnung bereitgestellte Signale von der Steuerungseinrichtung ausgewertet und zur Steuerung oder Regelung von Betriebsparametern des landwirtschaftlichen Fahrzeugs und/oder eines daran angeordneten Anbaugerätes verwendet werden.

Dabei können von der Sensoranordnung bereitgestellte Signale von der Steuerungseinrichtung ausgewertet und zur Kompensation von Störeinflüssen bei Messungen mit einem zusätzlichen magnetostriktiven Sensor verwendet werden, welche auf Abstandsänderungen basieren.

Zudem kann eine Temperaturdrift der Sensoren der Sensoranordnung durch die Steuerungseinrichtung kompensiert werden, indem die Steuerungseinrichtung von einem Temperatursensor empfangene Signale entsprechend auswertet und bei der Auswertung der Signale der Sensoranordnung entsprechend berücksichtigt.

Des Weiteren können zur Kompensation einer durch eine Exzentrizität und/oder eine Gestaltänderung des mechanisch belasteten Bauteils hervorgerufenen Beeinflussung der von der Sensoranordnung erfassten Messwerte durch die Steuerungseinrichtung von einem im Bereich der Sensoranordnung angeordneten Drehwinkelsensor empfangene Signale verwendet werden.

Vorteilhaft ist es, wenn zur Kalibrierung des mindestens einen berührungslos arbeitenden Sensors der modularen Sensoranordnung Wägungen des landwirtschaftlichen Fahrzeugs in unballastiertem Zustand und in ballastiertem Zustand durchgeführt werden. Die Messwerte der Wägungen des landwirtschaftlichen Fahrzeugs in unballastiertem Zustand und in ballastiertem Zustand können in der Steuerungseinrichtung gespeichert werden, um auf Basis dieser Messwerte den Offset des mindestens einen berührungslos arbeitenden Sensors zu bestimmen, der bei den späteren Messungen zur Bestimmung der mechanischen Belastung des mindestens eines Bauteils des landwirtschaftlichen Fahrzeugs berücksichtigt wird.

Weiterhin wird die Aufgabe erfindungsgemäß durch die Verwendung einer Sensoranordnung zur Erfassung einer mechanischen Belastung mindestens eines Bauteils eines landwirtschaftlichen Fahrzeugs gemäß dem unabhängigen Anspruch 15 gelöst, wobei die Sensoranordnung einem mechanisch belasteten, insbesondere bewegten, Bauteil zugeordnet ist und mindestens einen, auf dem Prinzip der berührungslosen Abstandsmessung basierenden, Sensor umfasst, der zur Erfassung einer für eine mechanische Belastung des belasteten Bauteils charakteristischen Veränderung des Abstands des mechanisch belasteten, insbesondere bewegten, Bauteils und einer das Bauteil abschnittsweise umgebenden Einhausung eingerichtet ist.

Die vorliegende Erfindung wird nachstehend anhand von in den Zeichnungen dargestellten Ausführungsbeispielen näher erläutert.

Es zeigen:
- Fig. 1: eine schematische Seitenansicht eines als Traktor ausgeführten landwirtschaftlichen Fahrzeugs;
- Fig. 2: eine perspektivische Teilansicht einer Hinterachse des Traktors gemäß Fig.1 mit einer modularen Sensoranordnung;
- Fig. 3: eine perspektivische Teilansicht der Hinterachse gemäß Fig. 2 in einer Teilschnittdarstellung mit einer Sensoranordnung in einer zweiten Ausführungsform ;
- Fig. 4: eine perspektivische Teilansicht der Hinterachse gemäß Fig. 2 in einer Teilschnittdarstellung mit einer Sensoranordnung in einer dritten Ausführungsform.

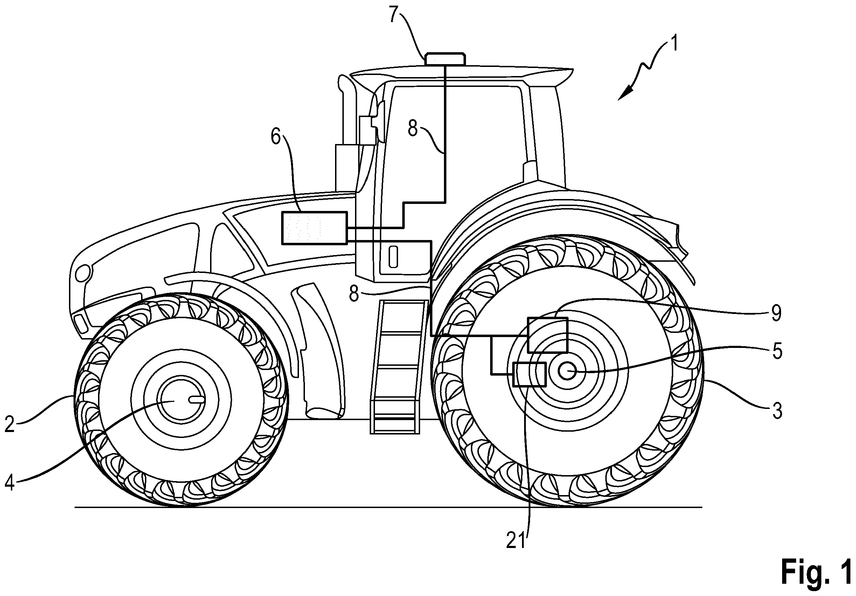

In Fig. 1 ist ein landwirtschaftliches Fahrzeug in Form eines Traktors 1 in schematischer Seitenansicht dargestellt. Es handelt sich bei dem Traktor 1 beispielsweise um einen Standardtraktor, der mit einem Antriebsmotor und einem Fahrwerk ausgestattet ist. Davon sind in der Ansicht gemäß Fig. 1 jeweils ein Vorderrad 2 und ein Hinterrad 3 dargestellt. Die Vorderräder 2 sind jeweils an einer dazwischen liegenden Vorderachse 4 und die Hinterräder 3 sind jeweils an einer dazwischen liegenden Hinterachse 5 angebaut. Der Traktor 1 ist über die Hinterräder 3 antreibbar. Zu diesem Zweck weist der Traktor 1 einen Antriebsstrang auf, mit dem eine Antriebsverbindung vom nicht gezeigten Antriebsmotor über die Hinterachse 5 zu den Hinterrädern 3 herstellbar ist.

Die Vorderräder 2 und die Hinterräder 3 sind Teil des Fahrwerks und stellen den Kontakt des Traktors 1 gegenüber dem Boden her. Die Gesamtmasse des Traktors 1 stützt sich demnach ausschließlich über die Vorderräder 2 und die Hinterräder 3 auf dem Boden ab. Dabei wirken an sämtlichen Rädern 2, 3 des Traktors 1 in vertikaler Richtung Kräfte, die als Radlast bezeichnet werden. Diese Kräfte resultieren aus dem Eigengewicht des Traktors 1, einer Anbringung eines Anbaugerätes sowie einer gegebenenfalls erforderlich werdenden Ballastierung. An den angetriebenen Hinterrädern 3 des Traktors 1 wirken im Antriebszustand zusätzlich in horizontaler Richtung wirkende, als Triebkräfte bezeichnete Kräfte beziehungsweise im Bremszustand Bremskräfte, sowie Antriebsmomente beziehungsweise im Bremszustand Bremsmomente. Weiterhin treten Stützkräfte auf, die von an dem Traktor 1 front- und/oder heckseitig angebrachten Anbaugeräten beziehungsweise einer Ballastierung eingebracht werden.

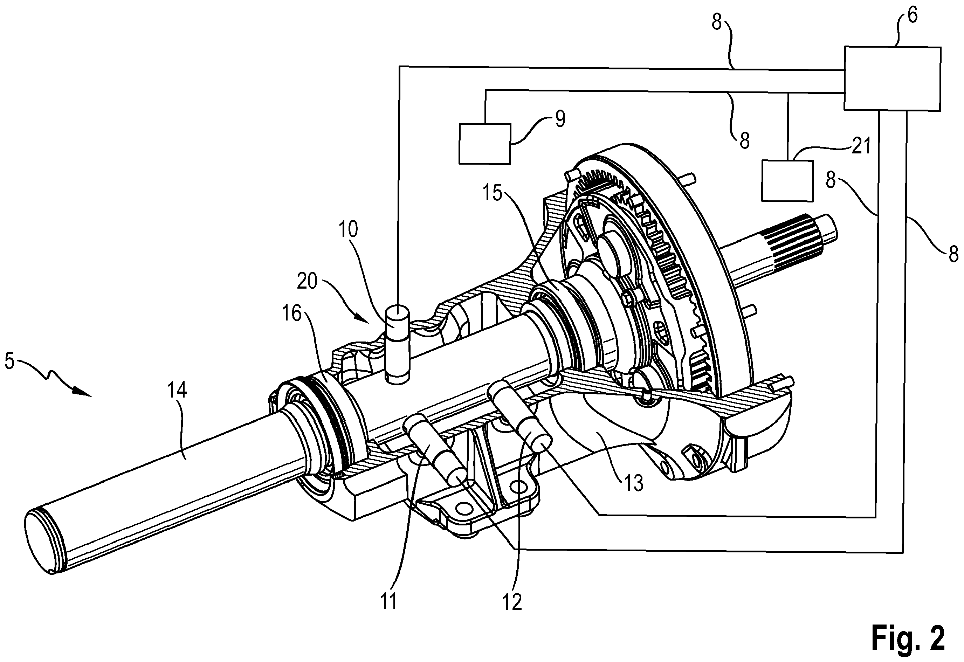

Zur Erfassung dieser vertikal und horizontal wirkenden Kräfte ist eine modulare Sensoranordnung 20 vorgesehen, wie sie in den Fig. 2 bis 4 dargestellt ist. Die modulare Sensoranordnung 20 ist durch Signal- und Steuerleitungen 8 mit einer Steuerungseinrichtung 6 am oder im Traktor 1 verbunden. Die Steuerungseinrichtung 6 wertet die von der modularen Sensoranordnung 20 aufgenommenen Signale aus.

Wie aus Fig. 1 ersichtlich, ist die Steuerungseinrichtung 6 zudem durch eine Signal- und Steuerleitung 8 mit einem Signalempfänger 7 eines Positionsortungssystems verbunden. Weiterhin ist im Bereich der Hinterräder ein Temperatursensor 9 angeordnet. Auch dieser Temperatursensor 9 ist durch eine Signal- und Steuerleitung 8 mit der Steuerungseinrichtung 6 verbunden.

Darüber hinaus kann ein Drehwinkelsensor 21 im Bereich der modularen Sensoranordnung 20 angeordnet sein. Der Drehwinkelsensor 21 kann als Inkrementalgeber oder Absolutwertgeber ausgeführt sein. Die Messsignale des Drehwinkelsensors 21 können zur Kompensation einer durch eine Exzentrizität und/oder eine Gestaltänderung des bewegten, mechanisch belasteten Bauteils hervorgerufenen Beeinflussung der von der modularen Sensoranordnung 20 erfassten Messwerte verwendet werden. Auch dieser Drehwinkelsensor 21 ist durch eine Signal- und Steuerleitung 8 mit der Steuerungseinrichtung 6 verbunden.

Fig. 2 zeigt eine perspektivische Teilansicht der Hinterachse 5 des in Fig. 1 gezeigten Traktors 1 in einer Teilschnittdarstellung. Die Hinterachse 5 ist in ihren wesentlichen Merkmalen symmetrisch aufgebaut. Insbesondere weist die Hinterachse 5 von einem mittig angeordneten Differential nach links und nach rechts zu den jeweiligen Hinterrädern 3 verlaufende Hinterachswellen 14 auf. Jede der Hinterachswellen 14 ist in einem Achstrichtergehäuse 13 mittels Wälzlagern drehbar gelagert. An einem äußeren Bereich des jeweiligen Achstrichtergehäuses 13, das heißt dort wo die Hinterachswelle 14 aus dem geschlossenen Achstrichtergehäuse 13 der Hinterachse 5 austritt, befindet sich ein äußeres Radlager 16. Innerhalb des Achstrichtergehäuses 13 ist, beabstandet zu dem äußeren Radlager 16, ein inneres Radlager 15 angeordnet. Das jeweilige äußere Radlager 16 bildet für die jeweilige Hinterachswelle 14 eine äußerste Lagerstelle an der Hinterachse 5. Die innerhalb der jeweiligen Hinterachswelle 14 wirkenden Biegemomente beziehungsweise Normalspannungen, die insbesondere mit einer auf das jeweilige Hinterrad 3 wirkenden Radlast und/oder mit einer darauf wirkenden Triebkraft korrespondieren, erreichen im Bereich des äußeren Radlagers 16 konstruktionsbedingt jeweils ihren höchsten Wert.

Die Hinterachse 5 weist in diesem Bereich die modulare Sensoranordnung 20 auf, mit welcher sich eine mechanische Belastung der Hinterachswelle 14 erfassen lässt, wobei die Anordnung in einem größtmöglichen Abstand zu den Lagerstellen erfolgen sollte. Insbesondere lassen sich mit der Sensoranordnung 20 die auf die Hinterachswelle 14 in vertikaler und horizontaler Richtung wirkenden Radkräfte, Trieb- und Bremskraft, erfassen.

Die Sensoranordnung 20 umfasst in dem in Fig. 2 dargestellten Ausführungsbeispiel zumindest zwei voneinander unabhängige Sensoren 10, 11, welche als berührungslos arbeitende Abstandssensoren ausgebildet sind. Die Sensoren 10, 11 sind in dem jeweiligen Achstrichtergehäuse 13 der Hinterachse 5 angeordnet. Der Sensor 10, welcher in vertikaler Richtung zur Hinterachswelle 14 ausgerichtet ist, dient der Erfassung der vertikal wirkenden Radlast. Um einen Winkel von 90°in Umfangsrichtung versetzt hierzu ist der Sensor 11 angeordnet, welcher der Erfassung der in horizontaler Richtung wirkenden Triebkraft beziehungsweise Bremskraft dient. Die Anordnung der Sensoren 10 und 11 erfolgt dabei vorzugsweise im Bereich größter Relativverformung der Hinterachswelle 14. Der jeweilige Sensor 10, 11 ist durch eine Signal- und Steuerleitung 8 mit der Steuerungseinrichtung 6 verbunden.

Jeder Sensor 10, 11 ist als ein berührungslos arbeitender Abstandssensor ausgeführt, welcher einen Sensorkopf aufweist, der dem Messobjekt, das heißt der Hinterachswelle 14 zugewandt ist. Dabei kann es sich um induktive Abstandssensoren handeln, die auf dem Wirbelstrommessprinzip basieren. Der jeweilige Sensor 10, 11 ist dazu eingerichtet, eine Abstandsänderung aufgrund einer Relativverformung zwischen der Hinterachswelle 14 und dem Achstrichtergehäuse 13 zu erfassen. Hierdurch lassen sich die in die Hinterachswelle 14 eingeleiteten Radkräfte, bestimmen.

In Ergänzung ist ein magnetostriktiver Sensor 12 vorgesehen, welcher benachbart zu den Abstandssensoren 10 und 11 angeordnet ist. Der magnetostriktive Sensor 12 dient dabei der Drehmomentbestimmung. Dabei wird sich der Umstand zunutze gemacht, dass das bereits aufgrund der Kraftmessung durch die beiden Abstandssensoren 10, 11 bereitgestellte Signal von der Steuerungseinrichtung 6 zur Kompensation der Abstandsänderung des Sensorkopfes des magnetostriktiven Sensors 12 verwendet wird. Der magnetostriktive Sensor 12 kann als aktiver oder passiver Sensor 12 ausgeführt sein.

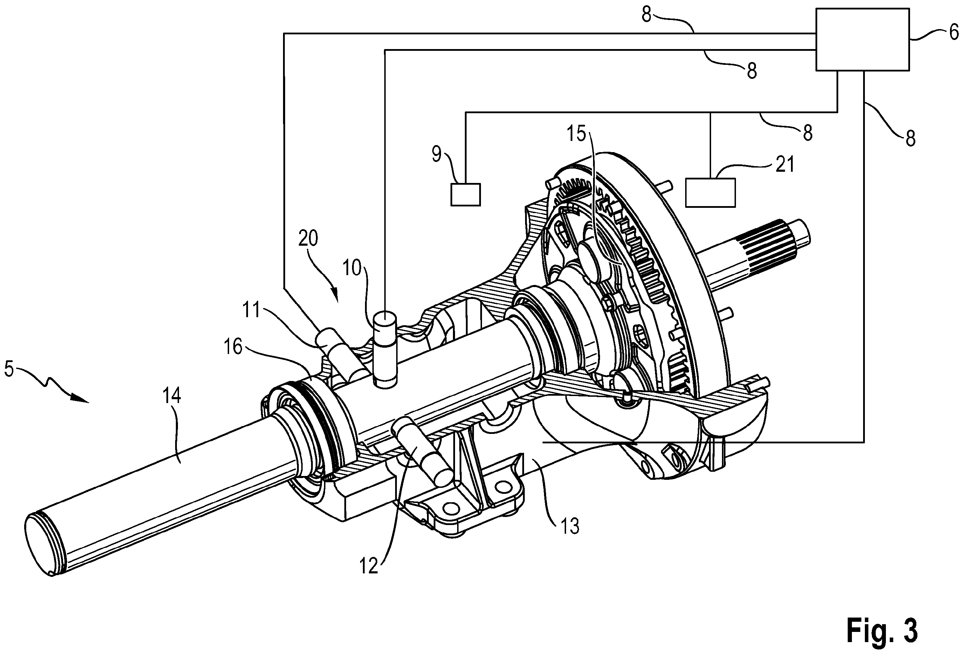

Die Darstellung in Fig. 3 zeigt eine perspektivische Teilansicht der Hinterachse 5 des in Fig. 1 gezeigten Traktors 1 in einer Teilschnittdarstellung in einer zweiten Ausführungsform. Die in Fig. 3 dargestellte Sensoranordnung 20 unterscheidet sich von der gemäß Fig. 2 dadurch, dass der zusätzliche magnetostriktive Sensor 12 in der gleichen vertikalen Ebene liegend über den Umfang der Hinterachswelle 14 versetzt zu den beiden Abstandssensoren 10, 11 angeordnet ist.

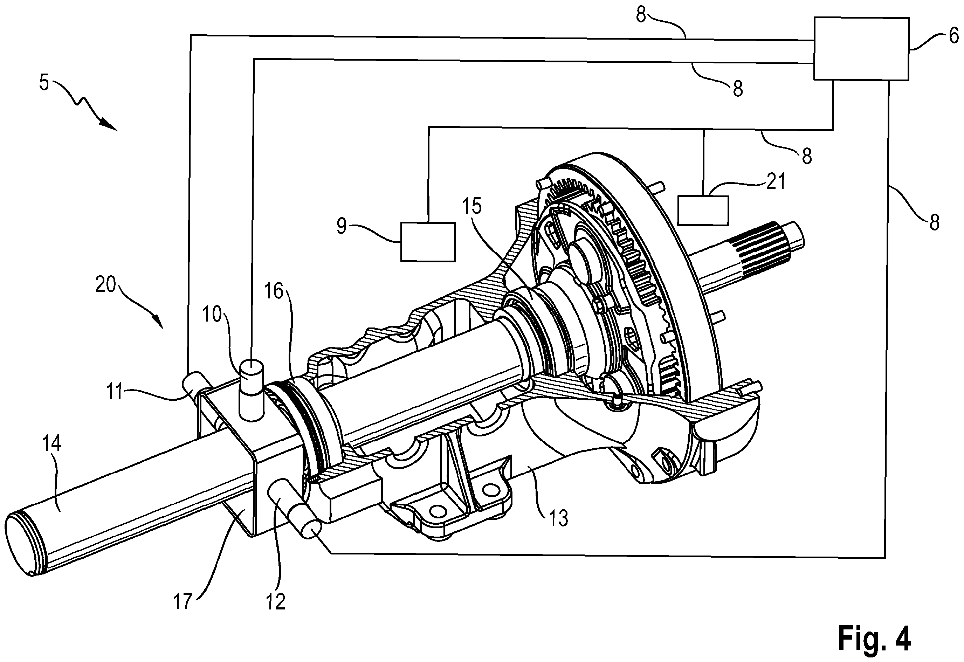

In Fig. 4 ist ein weiteres Ausführungsbeispiel dargestellt. Die Darstellung in Fig. 4 zeigt eine perspektivische Teilansicht der Hinterachse 5 des in Fig. 1 gezeigten Traktors 1 in einer Teilschnittdarstellung gemäß einer zweiten Ausführungsform. Diese Variante unterscheidet sich von der vorangehend beschriebenen Ausführungsform dadurch, dass die Sensoranordnung 20 außerhalb des Achstrichtergehäuses 13 der Hinterachse 5 erfolgt. Eine Haltevorrichtung 17 ist an dem Achstrichtergehäuse 13 benachbart zu dem äußeren Radlager 16 an dem Achstrichtergehäuse 13 anbringbar. Die Haltevorrichtung 17 trägt die zumindest zwei Sensoren 10, 11 entsprechend der in Fig. 2 dargestellten Anordnung. Mittels einer solchen Haltevorrichtung 17 ist es auf relativ einfache Weise möglich, die Sensoranordnung 20 an Traktoren nachzurüsten, deren Achstrichtergehäuse 13 nicht mit entsprechend vorkonfektionierten Aufnahmen zur Anordnung der einzelnen Sensoren 10, 11 ausgeführt ist.

Die Anordnung des Temperatursensors 9 in dem Bereich der Sensoranordnung 20 bietet die Möglichkeit, eine Temperaturdrift während der Messung durch die den Abstand messenden Sensoren 10, 11 zu kompensieren. Die von dem Temperatursensor 9 bereitgestellten Signale werden von der Steuerungseinrichtung 6 empfangen und ausgewertet. Die Temperaturkompensation findet auch bei Messungen durch den optional angeordneten magnetostriktiven Sensor 12 Anwendung.

Zudem ist die Steuerungseinrichtung 6 zur Kompensation einer auf Abstandsänderungen des Sensorkopfes des magnetostriktiven Sensors 12 zu der bewegten Hinterachswelle 14 basierenden Störgröße eingerichtet. Dazu wird das bereits aufgrund der Kraftmessung von den beiden den Abstand messenden Sensoren 10, 11 jeweils bereitgestellte Signal von der Steuerungseinrichtung 6 zur Kompensation der Abstandsänderung des Sensorkopfes des magnetostriktiven Sensors 12 verwendet.

Durch das Verwenden der berührungslos arbeitenden Sensoren 10, 11 zur Abstandsmessung ergeben sich signifikante Vorteile bei der Messung beziehungsweise Erfassung der auf die Hinterachswelle 14 wirkenden Radkräfte. Eine Ergänzung der Sensoranordnung 20 durch den magnetostriktiven Sensor 12 bietet zusätzlich die Möglichkeit der Drehmomentmessung, wobei gleichzeitig die Abstandsmessung herangezogen wird, um die aus einer Abstandsänderung des magnetostriktiven Sensors 12 resultierende Störgröße herauszufiltern, die die Drehmomentmessung durch den magnetostriktiven Sensor 12 negativ beeinflusst. Darüber hinaus ist die Nachrüstbarkeit der Sensoranordnung 20 gegeben, da keine speziellen Bauteilwerkstoffe, die für eine Vormagnetisierung der Achswelle gemäß dem Stand der Technik notwendig wären, sowie keine aufwändig magnetisierten Bauteile verwendet werden. Wegen der fehlenden Magnetisierung der Achswelle ist diese unempfindlich gegenüber Einflüssen, die auf das Magnetfeld einwirken und es verändern können.

Dies ermöglicht außerdem ein modulares Sensorkonzept, bei dem entweder nur die Radkräfte, auch einzeln, oder zusätzlich das Raddrehmoment sensiert werden, oder sowohl Raddrehmomente als auch die Radkräfte. Entsprechend kann abweichend von den Darstellungen in den Fig. 2 bis 4 eine Sensoranordnung 20 lediglich den Sensor 10 zur Erfassung der Radlast und/oder den Sensor 11 zur Erfassung der Triebkraft umfassen und zusätzlich den Sensor 12 zur Erfassung des Drehmomentes.

### Bezugszeichenliste

- 1: Traktor
- 2: Vorderrad
- 3: Hinterrad
- 4: Vorderachse
- 5: Hinterachse
- 6: Steuerungseinrichtung
- 7: Signalempfänger
- 8: Signal- und Steuerleitung
- 9: Temperatursensor
- 10: Sensor zur Erfassung der Radlast
- 11: Sensor zur Erfassung der Triebkraft
- 12: Magnetostriktiver Sensor
- 13: Achstrichtergehäuse
- 14: Hinterachswelle
- 15: Inneres Radlager
- 16: Äußeres Radlager
- 17: Haltevorrichtung
- 20: Sensoranordnung
- 21: Drehwinkelsensor

## Patentansprüche

1. Landwirtschaftliches Fahrzeug (1), umfassend durch Kräfte und/oder Momente mechanisch belastete Bauteile (5, 14), eine Steuerungseinrichtung (6) sowie eine Messvorrichtung zur Erfassung der mechanischen Belastung mindestens eines der Bauteile (14), wobei das landwirtschaftliche Fahrzeug (1) eine, insbesondere modulare, Sensoranordnung (20) zur Anordnung an mindestens einem Bauteil (5, 14) des Fahrzeuges (1) aufweist, **dadurch gekennzeichnet, dass** die Sensoranordnung (20) mindestens einen, auf dem Prinzip der berührungslosen Abstandsmessung basierenden, Sensor (10, 11) zur Erfassung einer für eine mechanische Belastung charakteristischen physikalischen Größe aufweist, wobei mittels der Sensoranordnung (20) als charakteristische physikalische Größe eine Relativverformung zwischen dem mechanisch belasteten Bauteil (14) und einer das Bauteil (14) abschnittsweise umgebenden Einhausung (13) messbar ist.

2. Landwirtschaftliches Fahrzeug (1) nach Anspruch 1, **dadurch gekennzeichnet, dass** eine Anordnung von zwei oder mehr Sensoren (10, 11, 12) in unterschiedlichen Ebenen des mindestens einen mechanisch belasteten Bauteils (14) erfolgt.

3. Landwirtschaftliches Fahrzeug (1) nach einem der vorherigen Ansprüche, **dadurch gekennzeichnet, dass** die das mechanisch belastete Bauteil (14) abschnittsweise umgebende Einhausung (13) mit einer oder mehreren vorkonfektionierten Montagestellen ausgestattet ist.

4. Landwirtschaftliches Fahrzeug (1) nach einem der vorherigen Ansprüche, **dadurch gekennzeichnet, dass** das mechanisch belastete Bauteil (14) als ein bewegtes Bauteil (14), insbesondere als Welle, ausgeführt ist.

5. Landwirtschaftliches Fahrzeug (1) nach einem der vorherigen Ansprüche, **dadurch gekennzeichnet, dass** die Sensoranordnung (20) mittels einer Haltevorrichtung (17) an einer das mindestens eine mechanisch belastete Bauteil (14) aufnehmenden Einhausung (13) anbringbar ist.

6. Landwirtschaftliches Fahrzeug (1) nach einem der vorherigen Ansprüche, **dadurch gekennzeichnet, dass** die Steuerungseinrichtung (6) zur Erfassung und Auswertung der von der Sensoranordnung (20) bereitgestellten Signale eingerichtet ist.

7. Landwirtschaftliches Fahrzeug (1) nach einem der vorherigen Ansprüche, **dadurch gekennzeichnet, dass** die zur Messung des Abstands verwendeten Sensoren (10, 11) der Sensoranordnung (20) als induktive Abstandssensoren ausgeführt sind.

8. Landwirtschaftliches Fahrzeug (1) nach einem der vorherigen Ansprüche, **dadurch gekennzeichnet, dass** die Sensoranordnung (20) einen zusätzlichen Sensor (12) umfasst, der auf dem berührungslosen Messprinzip der Magnetostriktion basiert.

9. Landwirtschaftliches Fahrzeug nach Anspruch 8, **dadurch gekennzeichnet, dass** die Steuerungseinrichtung (6) zur Kompensation einer auf Abstandsänderungen des Sensorkopfes des magnetostriktiven Sensors (12) zu dem mechanisch belasteten Bauteil (14) basierenden Störgröße eingerichtet ist.

10. Verfahren zur Erfassung einer mechanischen Belastung von Bauteilen (5, 14) eines landwirtschaftlichen Fahrzeugs (1) durch Kräfte und/oder Momente, wobei die mechanische Belastung mindestens eines der Bauteile (5, 14) durch eine Messvorrichtung erfasst und von einer Steuerungseinrichtung (6) ausgewertet wird, wobei die Messvorrichtung als eine, insbesondere modulare, Sensoranordnung (20) ausgeführt ist, die mindestens einem Bauteil (5, 14) des Fahrzeuges (1) zugeordnet wird, **dadurch gekennzeichnet, dass** die Messvorrichtung mindestens einen, auf dem Prinzip der berührungslosen Abstandsmessung basierenden, Sensor (10, 11) zur Erfassung einer für eine mechanische Belastung charakteristischen physikalischen Größe aufweist, wobei mittels der Sensoranordnung (20) als charakteristischen physikalischen Größe eine Relativverformung zwischen dem Bauteil (14) und einer das Bauteil (14) abschnittsweise umgebenden Einhausung (13) gemessen wird.

11. Verfahren nach Anspruch 9, **dadurch gekennzeichnet, dass** von der Sensoranordnung (20) bereitgestellte Signale von der Steuerungseinrichtung (6) ausgewertet und zur Steuerung oder Regelung von Betriebsparametern des landwirtschaftlichen Fahrzeugs (1) und/oder eines daran angeordneten Anbaugerätes verwendet werden.

12. Verfahren nach einem der Ansprüche 9 oder 10, **dadurch gekennzeichnet, dass** von der Sensoranordnung (20) bereitgestellte Signale von der Steuerungseinrichtung (6) ausgewertet und zur Kompensation von Störeinflüssen bei Messungen mit einem zusätzlichen magnetostriktiven Sensor (12) verwendet werden, welche auf Abstandsänderungen basieren.

13. Verfahren nach einem der Ansprüche 9 bis 11, **dadurch gekennzeichnet, dass** zur Kalibrierung des mindestens einen Sensors (10, 11) der Sensoranordnung (20) Wägungen des landwirtschaftlichen Fahrzeugs (1) in unballastiertem Zustand und in ballastiertem Zustand durchgeführt werden.

14. Verwendung einer Messvorrichtung zur Erfassung einer mechanischen Belastung mindestens eines Bauteils (5, 14) eines landwirtschaftlichen Fahrzeugs (1), wobei die Messvorrichtung als eine, insbesondere modulare, Sensoranordnung (20) ausgeführt ist, wobei die Sensoranordnung (20) einem mechanisch belasteten Bauteil (5, 14) zugeordnet ist, **dadurch gekennzeichnet, dass** die Messvorrichtung mindestens einen, auf dem Prinzip der berührungslosen Abstandsmessung basierenden, Sensor (10, 11) umfasst, der zur Erfassung einer für eine mechanische Belastung des Bauteils (14) charakteristischen Veränderung des Abstands zwischen dem Bauteil (14) und einer das Bauteil (14) abschnittsweise umgebenden Einhausung (13) eingerichtet ist.

## Claims

1. An agricultural vehicle (1) including components (5, 14) mechanically loaded by forces and/or moments, a control device (6) and a measuring device for detecting the mechanical loading of at least one of the components (14), wherein the agricultural vehicle (1) has an in particular modular sensor arrangement (20) for the arrangement on at least one component (5, 14) of the vehicle (1), **characterised in that** the sensor arrangement (20) has at least one sensor (10, 11) based on the principle of contactless distance measurement for detecting a physical parameter characteristic of a mechanical loading, wherein a relative deformation between the mechanically loaded component (14) and a housing (13) which portion-wise surrounds the component (14) can be measured by means of the sensor arrangement (20) as the characteristic physical parameter.

2. An agricultural vehicle (1) according to claim 1 **characterised in that** an arrangement of two or more sensors (10, 11, 12) is implemented in different planes of the at least one mechanically loaded component (14).

3. An agricultural vehicle (1) according to one of the preceding claims **characterised in that** the housing (13) which portion-wise surrounds the mechanically loaded component (14) is provided with one or more prefabricated mounting locations.

4. An agricultural vehicle (1) according to one of the preceding claims **characterised in that** the mechanically loaded component (14) is in the form of a moved component (14), in particular a shaft.

5. An agricultural vehicle (1) according to one of the preceding claims **characterised in that** the sensor arrangement (20) can be mounted by means of a holding device (17) to a housing (13) which accommodates the at least one mechanically loaded component (14).

6. An agricultural vehicle (1) according to one of the preceding claims **characterised in that** the control device (6) is adapted to detect and evaluate the signals provided by the sensor arrangement (20).

7. An agricultural vehicle (1) according to one of the preceding claims **characterised in that** the sensors (10, 11) of the sensor arrangement (20), that are used for measuring the distance, are in the form of inductive distance sensors.

8. An agricultural vehicle (1) according to one of the preceding claims **characterised in that** the sensor arrangement (20) includes an additional sensor (12) based on the contactless measurement principle of magnetostriction.

9. An agricultural vehicle according to claim 8 **characterised in that** the control device (6) is adapted to compensate for a disturbance variable based on alterations in the distance of the sensor head of the magnetostrictive sensor (12) relative to the mechanically loaded component (14).

10. A method of detecting a mechanical loading of components (5, 14) of an agricultural vehicle (1) by forces and/or moments, wherein the mechanical loading of at least one of the components (5, 14) is detected by a measuring device and evaluated by a control device (6), wherein the measuring device is in the form of an in particular modular sensor arrangement (20) which is associated with at least one component (5, 14) of the vehicle (1), **characterised in that** the measuring device has at least one sensor (10, 11) based on the principle of contactless distance measurement for detecting a physical parameter characteristic of a mechanical loading, wherein a relative deformation between the component (14) and a housing (13) which portion-wise surrounds the component (14) is measured by means of the sensor arrangement (20) as the characteristic physical parameter.

11. A method according to claim 9 **characterised in that** signals provided by the sensor arrangement (20) are evaluated by the control device (6) and used for open-loop or closed-loop control of operating parameters of the agricultural vehicle (1) and/or an attachment arranged thereon.

12. A method according to one of claims 9 and 10 **characterised in that** signals provided by the sensor arrangement (20) are evaluated by the control device (6) and used for compensating for disturbance influences upon measurements with an additional magnetostrictive sensor (12) which are based on alterations in distance.

13. A method according to one of claims 9 to 11 **characterised in that** weighing operations for the agricultural vehicle (1) are carried out in an unballasted state and a ballasted state for calibration of the at least one sensor (10, 11) of the sensor arrangement (20).

14. Use of a measuring device for detecting a mechanical loading of at least one component (5, 14) of an agricultural vehicle (1), wherein the measuring device is in the form of an in particular modular sensor arrangement (20), wherein the sensor arrangement (20) is associated with a mechanically loaded component (5, 14), **characterised in that** the measuring device includes at least one sensor (10, 11) based on the principle of contactless distance measurement, which is adapted to detect an alteration, characteristic of a mechanical loading of the component (14), in the distance between the component (14) and a housing (13) which portion-wise surrounds the component (14).

## Revendications

1. Véhicule agricole (1), comprenant des composants (5, 14) sollicités mécaniquement par des forces et/ou des moments, un équipement de commande (6) ainsi qu'un dispositif de mesure pour détecter la sollicitation mécanique d'au moins un des composants (14), le véhicule agricole (1) comportant un agencement de capteurs (20), en particulier modulaire, à disposer sur au moins un composant (5, 14) du véhicule (1), **caractérisé en ce que** l'agencement de capteurs (20) comporte au moins un capteur (10, 11) reposant sur le principe de la mesure de distance sans contact pour détecter une grandeur physique caractéristique d'une sollicitation mécanique, l'agencement de capteurs (20) permettant de mesurer, comme grandeur physique caractéristique, une déformation relative entre le composant sollicité mécaniquement (14) et un carter (13) entourant le composant (14) par endroits.

2. Véhicule agricole (1) selon la revendication 1, **caractérisé en ce qu'**un agencement de deux ou plusieurs capteurs (10, 11, 12) est prévu dans divers plans du au moins un composant sollicité mécaniquement (14).

3. Véhicule agricole (1) selon une des revendications précédentes, **caractérisé en ce que** le carter (13) entourant le composant sollicité mécaniquement (14) par endroits est muni d'un ou plusieurs points de montage préconfectionnés.

4. Véhicule agricole (1) selon une des revendications précédentes, **caractérisé en ce que** le composant sollicité mécaniquement (14) est conformé en composant mobile (14), en particulier en arbre.

5. Véhicule agricole (1) selon une des revendications précédentes, **caractérisé en ce que** l'agencement de capteurs (20) peut être monté sur un carter (13) recevant le au moins un composant sollicité mécaniquement (14) au moyen d'un dispositif de maintien (17).

6. Véhicule agricole (1) selon une des revendications précédentes, **caractérisé en ce que** l'équipement de réglage (6) est agencé pour détecter et analyser les signaux fournis par l'agencement de capteurs (20).

7. Véhicule agricole (1) selon une des revendications précédentes, **caractérisé en ce que** les capteurs (10, 11) de l'agencement de capteurs (20) utilisés pour mesurer la distance sont conformés en capteurs de distance inductifs.

8. Véhicule agricole (1) selon une des revendications précédentes, **caractérisé en ce que** l'agencement de capteurs (20) comprend un capteur supplémentaire (12) qui repose sur le principe de mesure sans contact de la magnétostriction.

9. Véhicule agricole selon la revendication 8, **caractérisé en ce que** l'équipement de commande (6) est agencé pour compenser une grandeur perturbatrice reposant sur des variations de distance de la tête de capteur du capteur magnétostrictif (12) par rapport au composant sollicité mécaniquement (14).

10. Procédé pour détecter une sollicitation mécanique de composants (5, 14) d'un véhicule agricole (1) due à des forces et/ou des moments, la sollicitation mécanique d'au moins un des composants (5, 14) étant détectée par l'intermédiaire d'un dispositif de mesure et étant analysée par un équipement de commande (6), le dispositif de mesure étant conçu sous la forme d'un agencement de capteurs (20), en particulier modulaire, qui est associé au moins à un composant (5, 14) du véhicule (1), **caractérisé en ce que** le dispositif de mesure comporte au moins un capteur (10, 11) reposant sur le principe de la mesure de distance sans contact pour détecter une grandeur physique caractéristique d'une sollicitation mécanique, l'agencement de capteurs (20) permettant de mesurer, comme grandeur physique caractéristique, une déformation relative entre le composant (14) et un carter (13) entourant le composant (14) par endroits.

11. Procédé selon la revendication 9, **caractérisé en ce que** des signaux fournis par l'agencement de capteur (20) sont analysés par l'équipement de commande (6) et utilisés pour commander ou réguler des paramètres de fonctionnement du véhicule agricole (1) et/ou d'un outil rapporté monté dessus.

12. Procédé selon une des revendications 9 ou 10, **caractérisé en ce que** des signaux fournis par l'agencement de capteurs (20) sont analysés par l'équipement de commande (6) et utilisés pour compenser des influences perturbatrices en cas de mesures avec un capteur magnétostrictif supplémentaire (12) qui reposent sur des variations de distance.

13. Procédé selon une des revendications précédentes 9 à 11, **caractérisé en ce que** pour étalonner le au moins un capteur (10, 11) de l'agencement de capteurs (20), des pesées du véhicule agricole (1) sont réalisées à l'état non ballasté et à l'état ballasté.

14. Utilisation d'un dispositif de mesure pour détecter une sollicitation mécanique d'au moins un composant (5, 14) d'un véhicule agricole (1), le dispositif de mesure étant conçu sous la forme d'un agencement de capteurs (20), en particulier modulaire, l'agencement de capteurs (20) étant associé à un composant sollicité mécaniquement (5, 14), **caractérisée en ce que** le dispositif de mesure comprend au moins un capteur (10, 11) reposant sur le principe de la mesure de distance sans contact, lequel est agencé pour détecter une variation, caractéristique d'une sollicitation mécanique du composant (14), de la distance entre le composant (14) et un carter (13) entourant le composant (14) par endroits.
